# FASCICULE DE BREVET EUROPEEN

(11) **EP 3 097 215 B1**
(45) Date de publication et mention de la délivrance du brevet: **25.10.2017**
(21) Numéro de dépôt: 15704345.6
(22) Date de dépôt: 19.01.2015
(51) Int. Cl.: C22C 21/00, C22B 1/00, C22B 21/00, A47J 36/02, A47J 27/00

(54) **PROCÉDÉ DE FABRICATION D'UN ALLIAGE D'ALUMINIUM POUR CORROYAGE POUR FABRIQUER DES RÉCIPIENTS DE CUISSON**
VERFAHREN ZUR HERSTELLUNG VON SCHMIEDEALUMINIUMLEGIERUNGEN ZUR HERSTELLUNG VON KOCHGEFÄSSEN
PROCESS FOR MANUFACTURING WROUGHT ALUMINIUM ALLOYS FOR MANUFACTURING COOKING CONTAINERS

(30) Priorité: 21.01.2014 FR 1450485
(43) Date de publication de la demande: 30.11.2016
(73) Titulaire: SEB S.A., 69130 Ecully (FR)
(72) Inventeur: MEHAY, Roch, 74150 Rumilly (FR); MAUDOU, Florie, 74150 Rumilly (FR)
(74) Mandataire: Soares, Luis Filipe
(86) Numéro de dépôt international: PCT/FR2015/050127
(87) Numéro de publication internationale: WO 2015/110747

(56) Documents cités:
- US-A1- 2009 313 112
- US-A1- 2013 068 352

## Description

La présente invention concerne un procédé de fabrication d'un alliage d'aluminium pour corroyage, emboutissable et alimentaire pour fabriquer des récipients de cuisson.

L'aluminium est habituellement produit à partir d'un minerai appelé bauxite. Pour la fabrication d'une tonne d'aluminium prêt à être mis en forme, il est nécessaire d'extraire quatre tonnes de ce minerai, qui après des procédés combinant chimie et électrolyse, fourniront deux tonnes d'alumine, l'aluminium sous sa forme oxydée. C'est à partir des ces deux tonnes d'alumine qu'une tonne d'aluminium sous forme de lingots est produite. L'aluminium peut être transformé en une première catégorie d'alliage appelée alliage d'aluminium pour corroyage comportant un ajout en faible quantité de métaux tels que le silicium, le magnésium ou le zinc pour en modifier les caractéristiques techniques. Cet alliage d'aluminium pour corroyage a la qualité nécessaire pour être utilisé dans l'industrie des récipients de cuisson.

L'aluminium peut être transformé en une seconde catégorie d'alliage appelée alliage de fonderie où le pourcentage d'aluminium est plus faible et les tolérances sur les éléments d'alliages plus élevées. Cet alliage de fonderie est utilisé lorsque le procédé de mise en forme est le moulage.

Une troisième catégorie d'alliage appelée aluminium de désoxydation est quant à elle utilisée par l'industrie de l'acier comme un consommable, et ne nécessite pas de contrôle sur les éléments d'alliages présents tant que le pourcentage d'aluminium est suffisamment élevé.

Il est possible de produire les deuxième et troisième catégories d'alliages à partir de déchets recyclés. Ces filières de production sont mises en oeuvre par des entreprises appelées recycleurs. On connait notamment du document US20090313112 un procédé de fabrication d'un objet en aluminium de fonderie à partir notamment de récipients de cuisson usagés recyclés.

Cependant, la première catégorie d'alliage appelée alliage d'aluminium pour corroyage n'est produite qu'à partir d'aluminium primaire, issu d'un procédé d'électrolyse d'alumine ou éventuellement dans de petites proportions à partir de chutes d'aluminium industrielles dont on connait l'origine. Ainsi, le procédé de fabrication d'alliage d'aluminium pour corroyage est complexe et énergivore et nécessite de puiser dans les ressources naturelles.

Le but de la présente invention est de remédier aux inconvénients précités et de proposer un procédé de fabrication d'un alliage d'aluminium pour corroyage emboutissable et alimentaire pour fabriquer des récipients de cuisson qui soit respectueux de l'environnement.

Un autre but de l'invention est de proposer un procédé de fabrication d'un alliage d'aluminium pour corroyage emboutissable et alimentaire qui soit économique à mettre en oeuvre.

Ces buts sont atteints avec un procédé de fabrication d'un alliage d'aluminium pour corroyage emboutissable et alimentaire pour fabriquer des récipients de cuisson comportant une étape de collecte de récipients de cuisson usagés, formant une matière première brute, une étape de tri de la matière première brute pour former une matière première préparée ainsi qu'une étape de fusion de la matière première préparée caractérisé en ce que les étapes de collecte et de tri sont réalisées de telle sorte que la matière première préparée comporte une part en masse issue de récipients de cuisson usagés fabriqués en alliage d'aluminium de fonderie inférieure à 20%, la part restante étant issue majoritairement de récipients de cuisson usagés fabriqués en alliage d'aluminium pour corroyage.

Les récipients de cuisson en alliage d'aluminium de fonderie sont essentiellement produits dans un alliage d'aluminium/silicium. Le silicium est présent dans la majorité des alliages pour fonderie car sa principale caractéristique est d'améliorer la coulabilité du métal et, par conséquent, de limiter les risques de criques. Les alliages d'aluminium/silicium couramment utilisés en fonderie sont de la série 40000 suivant le mode de désignation EN 1780-1 et comportent un pourcentage de silicium en masse compris entre 10 et 12%.

Pour fabriquer des récipients de cuisson par emboutissage, la demanderesse a mis en évidence par essais que l'alliage d'aluminium pour corroyage utilisable devait contenir un pourcentage de silicium en masse au maximum de 2%.

La limitation de la part issue de récipients de cuisson fabriqués en aluminium de fonderie à moins de 20%, la part restante étant issue majoritairement de récipients de cuisson usagés fabriqués en alliage d'aluminium pour corroyage, permet d'obtenir après l'étape de fusion un alliage d'aluminium comportant un pourcentage de silicium en masse au maximum de 2%. Un alliage d'aluminium comportant un tel pourcentage de silicium en masse se rapproche donc des alliages d'aluminium connus et déjà homologués par la demanderesse pour fabriquer des récipients de cuisson par emboutissage.

Par récipients de cuisson usagés, on comprend des récipients de cuisson en fin de vie dont les utilisateurs se séparent mais également des déchets de fabrication de récipients de cuisson issus de la filière industrielle.

Un tel procédé permet de valoriser des récipients de cuisson usagés dans leur filière d'origine, afin de limiter les nuisances environnementales de la fin de vie de ces produits.

De préférence, à l'étape de collecte, on collecte majoritairement des récipients de cuisson usagés métalliques et de façon encore plus préférée, on collecte uniquement des récipients de cuisson usagés métalliques.

Ces dispositions permettent d'alléger considérablement l'étape de tri. En effet, la présence de récipients de cuisson en verre ou en plastique, notamment en silicone sera limitée, voir supprimée dans les récipients de cuisson collectés. De plus, les récipients de cuisson en acier et en acier inoxydable peuvent être séparés facilement des récipients de cuisson en alliage d'aluminium par un tri par aimantation qui est une opération simple.

De préférence, à l'étape de collecte, on collecte sur une zone géographique dont on détermine une estimation de la part en masse de récipients de cuisson en alliage d'aluminium de fonderie par rapport à la part de récipients de cuisson en alliage d'aluminium pour corroyage d'après les statistiques de vente de récipients de cuisson, la zone géographique de collecte étant suffisamment grande pour que les règles statistiques s'appliquent et en ce l'estimation participe à la détermination du type de tri effectué à l'étape de tri.

Cette disposition permet de sélectionner le type de tri le plus adapté, notamment le moins cher à mettre en oeuvre pour que la matière première préparée comporte une part issue de récipients de cuisson fabriqués en aluminium de fonderie inférieure à 20%.

Avantageusement, l'étape de tri comporte une étape de tri manuel pour exclure en tout ou partie les récipients de cuisson en alliage d'aluminium de fonderie.

Une telle étape de tri peut être mise en oeuvre facilement sans nécessiter des investissements importants. Les récipients de cuisson en alliage d'aluminium de fonderie sont effectivement reconnaissables sur la base de critères visuels liés à la présence de formes propre à une fabrication faisant intervenir un procédé de moulage, à l'épaisseur des parois du récipient et à l'assemblage mis en oeuvre pour la fixation des poignées.

De préférence, l'étape de tri comporte une analyse spectroscopique, notamment une spectroscopie d'émission optique de plasma créé par laser.

Cette disposition permet de séparer les alliages ou familles d'alliage, notamment en définissant un seuil en pourcentage de la masse de présence d'un élément d'alliage.

Avantageusement, le procédé comporte une étape de broyage thermique et l'étape de tri comporte un tri par granulométrie.

Cette disposition permet de séparer les récipients de cuisson en alliage d'aluminium pour corroyage et les récipients de cuisson en alliage d'aluminium de fonderie. En broyant à la température de 500 à 550°C des mélanges de récipients de cuisson en alliage d'aluminium pour corroyage et en alliage d'aluminium de fonderie, puis en criblant après broyage, on effectue la séparation. La grosse granulométrie correspond aux parties issues des récipients de cuisson en alliage d'aluminium pour corroyage et la petite granulométrie correspond aux parties issues des récipients de cuisson en alliage d'aluminium de fonderie.

De préférence, l'étape de tri comporte une spectrométrie de fluorescence X.

Cette disposition permet de séparer les familles d'alliage, notamment en définissant un seuil en pourcentage de la masse de présence d'un élément d'alliage. La spectrométrie de fluorescence X est une méthode d'analyse chimique utilisant une propriété physique de la matière, la fluorescence de rayons X. Lorsque l'on bombarde de la matière avec des rayons X, la matière réémet de l'énergie sous la forme, entre autres, de rayons X. Le spectre des rayons X émis par la matière est caractéristique de la composition du récipient de cuisson testé. En analysant ce spectre, on peut en déduire la composition élémentaire, c'est-à-dire les concentrations massiques en éléments du récipient de cuisson testé.

Avantageusement, à la fin de l'étape de tri, on incorpore dans la matière première préparée des chutes industrielles d'alliage d'aluminium pour corroyage dont les compositions et les origines sont connues.

Ainsi, la matière première préparée qui sera disposée dans le four de fusion est issue en totalité de matériaux recyclés.

De préférence, à l'étape de fusion, on utilise uniquement de la matière première préparée.

Avantageusement, l'étape de fusion est réalisée dans un four permettant de réaliser une coulée d'au moins 10 tonnes, de préférence d'au moins 15 tonnes.

La composition de la matière première préparée n'est pas toujours très homogène. Cette disposition permet de mettre en oeuvre une quantité de matière première préparée à fondre dans le four suffisamment importante pour atténuer les variations de compositions des lots d'alliage d'aluminium produits.

De préférence, à l'étape de collecte, on collecte les récipients de cuisson usagés en aluminium fabriqués à partir d'aluminium pour corroyage qui contiennent majoritairement des alliages d'aluminium appartenant aux séries 1000, 3000 et 4000.

L'invention concerne également un disque en alliage d'aluminium destiné à être transformé en récipient de cuisson, caractérisé en ce que l'alliage d'aluminium du disque est fabriqué suivant le procédé de fabrication précédemment décrit.

L'invention concerne également un récipient de cuisson, caractérisé en ce qu'il est fabriqué à partir d'un disque en alliage d'aluminium selon la disposition précédente.

Ainsi, le récipient de cuisson est fabriqué à partir d'un disque en alliage d'aluminium pour corroyage entièrement recyclé.

De préférence, le récipient de cuisson est une poêle, une casserole, une sauteuse, un faitout ou un autocuiseur

L'invention sera mieux comprise à l'étude des modes de réalisation pris à titre nullement limitatif et décrits ci après.

Le procédé de fabrication d'un alliage d'aluminium pour corroyage pour fabriquer des récipients de cuisson comporte une étape de collecte de récipients de cuisson usagés dans un ensemble appelé gisement. De préférence, à l'étape de collecte, on collecte majoritairement des récipients de cuisson usagés métalliques et de façon encore plus préférée, on collecte uniquement des récipients de cuisson usagés métalliques. Les récipients de cuisson usagés collectés forment une matière première brute.

Les récipients de cuisson métalliques collectés, par exemple en France, sont issus majoritairement d'alliages d'aluminium et d'acier ou d'acier inoxydable. Les récipients de cuisson métalliques issus d'alliages d'aluminium sont issus majoritairement d'alliages d'aluminium pour corroyage et d'alliages d'aluminium de fonderie. Par alliages d'aluminium pour corroyage, on comprend des alliages dont le constituant principal est l'aluminium, destinés à être transformés par des techniques de laminage, de matriçage ou de frappe et par alliages d'aluminium de fonderie, on comprend des alliages dont le constituant principal est l'aluminium, destinés à être transformés par des techniques de fonderie.

Les récipients de cuisson collectés issus d'alliages d'aluminium pour corroyage sont produits majoritairement dans les séries 1000, 3000 et 4000 suivant la norme européenne EN 573-1. Les alliages d'aluminium de la série 1000 comportent très peu d'éléments d'alliage, moins de 1%. Les alliages d'aluminium de la série 3000 comportent essentiellement du manganèse à un taux inférieur à 1,5%. Les alliages d'aluminium de la série 4000 comportent essentiellement du silicium à un taux inférieur à 2%. Les récipients de cuisson ne sont pas produits à partir des séries 2000, 6000, 7000, les éléments d'alliages Cu, Mg, Zn n'étant pas favorables pour la production de récipients de cuisson.

Les récipients de cuisson issus d'alliages d'aluminium de fonderie sont essentiellement produits dans un alliage d'aluminium/silicium. Les alliages d'aluminium/silicium couramment utilisés en fonderie sont de la série 40000 suivant le mode de désignation EN 1780-1 et ils comportent un pourcentage de silicium en masse compris entre 10 et 12%.

Les lots de récipient de cuisson collectés contiennent différents matériaux, certains assemblés entre eux. Par exemple, dans un récipient de cuisson standard, on trouve l'alliage d'aluminium du corps, l'alliage d'aluminium du goujon de fixation de la poignée et l'alliage d'aluminium de la pièce pare-flamme, le plastique, notamment la bakélite de la poignée et l'acier de la vis de fixation de la poignée.

On retrouve ainsi dans les lots de récipients de cuisson collectés des métaux non ferreux, notamment des alliages d'aluminium, de fonte d'aluminium, du cuivre, des métaux ferreux, notamment de l'acier, de la fonte d'acier, de l'acier inoxydable magnétique, de l'acier inoxydable amagnétique, des plastiques, notamment de la bakélite, du caoutchouc et d'autres matériaux, notamment du bois, des graisses, des revêtements du type émail ou polytétrafluoroéthylène.

De préférence, les récipients de cuisson usagés sont collectés dans des points de collecte, notamment des magasins de vente. Les récipients de cuisson collectés sont récupérés dans un bac de collecte, d'une capacité par exemple d'environ 300 L. Le bac de collecte est vidé régulièrement dans un contenant adapté à la logistique, d'une capacité par exemple d'environ 1000 L, disposé par exemple en arrière de magasin. Les contenants sont récupérés lors d'une tournée pour être regroupés à l'échelle locale, avantageusement par département ou par région. On constitue ainsi des lots qui sont transférés dans des bennes d'une capacité par exemple d'environ 35 m³ à 90 m³ pour être transportés vers un site de traitement.

Le procédé de fabrication d'un alliage d'aluminium pour corroyage pour fabriquer des récipients de cuisson comporte une étape de tri permettant l'extraction de la part de métaux non ferreux qui constitue une matière première préparée. Cette étape de tri peut comporter différentes phases, notamment :
- un broyage réalisé dans un broyeur ou un granulateur pour réduire et densifier la matière première brute,
- un ou plusieurs tri(s) par aimantation par un séparateur magnétique permanent du type overband ou une poulie magnétique pour exclure les métaux ferreux,

- un criblage par taille,
- un tri par courants de Foucault ou un tri sur critère de densité, soit par une machine à rayons X soit par un procédé de flottaison pour exclure les parties non métallique.

Les étapes de collecte et de tri sont réalisées de telle sorte que la matière première préparée comporte une part en masse issue de récipients de cuisson fabriqués en aluminium de fonderie inférieure à 20%.

De préférence, à l'étape de collecte, on collecte sur une zone géographique dont on détermine une estimation de la part en masse de récipients de cuisson en alliage d'aluminium de fonderie par rapport à la part de récipients de cuisson en alliage d'aluminium pour corroyage d'après les statistiques de vente de récipients de cuisson, ladite zone géographique de collecte étant suffisamment grande pour que les règles statistiques s'appliquent. A partir de l'estimation de la part en masse de récipients de cuisson en alliage d'aluminium de fonderie par rapport à la part de récipients de cuisson en alliage d'aluminium pour corroyage, on détermine le type de tri adapté pour que la matière première préparée comporte une part en masse issue de récipients de cuisson fabriqués en aluminium de fonderie inférieure à 20%.

Ainsi à titre d'exemple, sur une zone géographique où la part en masse de récipients de cuisson fabriqués en aluminium de fonderie est inférieure à 10%, un procédé de tri simple, comprenant uniquement des étapes de tri par aimantation, criblage et tri par courant de Foucault sera préféré, à condition que la capacité du four de fusion soit suffisante pour que les règles statistiques s'appliquent et permettent de ne pas avoir de coulées où le taux de silicium dépasse 2%. En revanche, sur une zone géographique où la part en masse de récipients de cuisson fabriqués en aluminium de fonderie est proche ou supérieure à 20%, un synoptique de tri faisant intervenir une étape de tri manuel ou de tri par spectroscopie sera privilégiée.

Avantageusement, l'étape de tri comporte une phase de tri manuel des récipients de cuisson suivant des catégories liées à leur matériau de construction principal, notamment les récipients de cuisson en acier, les récipients de cuisson en alliage d'aluminium. La phase de tri manuel peut également permettre de séparer récipients de cuisson en alliage d'aluminium pour corroyage et les récipients de cuisson en alliages d'aluminium de fonderie, sur des critères de construction identifiables, notamment visuellement. Des moyens de comptage ou pesage sont mis en oeuvre pour que la part en masse issue de récipients de cuisson fabriqués en alliage d'aluminium de fonderie soit inférieure à 20%.

Dans une variante de mise en oeuvre, la phase de tri manuel comporte une phase de démontage des récipients de cuisson pour récupérer de manière sélective les différents matériaux, notamment par cisaillement de la poignée ou par casse de la poignée en bloquant le corps ou la poignée dans une empreinte du type étau. Dans ce cas, le procédé ne comporte pas de phase de broyage.

Dans une autre variante de mise en oeuvre, la phase de tri manuel est suivie d'une phase de broyage. La phase de tri permet d'exclure certaines catégories de récipients de cuisson, notamment les récipients de cuisson en inox amagnétique, en fonte acier qui peuvent être incompatibles avec le broyeur, les récipients de cuisson comportant une partie en alliage d'aluminium et une partie en acier inoxydable pour les insérer ensuite dans une phase de tri spécialisé, les récipients de cuisson majoritairement en alliage d'aluminium pour les traiter de manière isolée sur un procédé plus efficace traitant uniquement l'alliage d'aluminium et la bakélite, les récipients de cuisson entièrement en aluminium sans poignée, par exemple des récipients de cuisson de la gamme Tefal Ingenio. Des moyens de comptage ou pesage sont mis en oeuvre pour que la part en masse issue de récipients de cuisson fabriqués en alliage d'aluminium de fonderie soit inférieure à 20%.

Avantageusement, le procédé comporte une étape de broyage thermique ou à chaud et l'étape de tri comporte un tri par granulométrie qui permet de séparer les parties en alliage d'aluminium pour corroyage et les parties en alliage d'aluminium de fonderie. En broyant à la température de 500 à 550°C des mélanges de récipients de cuisson en alliage d'aluminium pour corroyage et en alliage d'aluminium de fonderie, puis en criblant après broyage, on effectue la séparation. La grosse granulométrie correspond aux parties issues des récipients de cuisson en alliage d'aluminium pour corroyage et la petite granulométrie correspond aux parties issues des récipients de cuisson en alliage d'aluminium de fonderie. Des moyens de pesage sont mis en oeuvre pour que la part en masse issue de récipients de cuisson fabriqués en alliage d'aluminium de fonderie soit inférieure à 20%.

Dans une variante de mise en oeuvre, l'étape de tri comporte une spectroscopie, notamment sur plasma induit par laser qui permet d'analyser quantitativement les composants de la matière. Un laser est émis sur l'échantillon à analyser pour créer localement un plasma. Avec l'analyse spectroscopique de ce plasma, on identifie les différents éléments présents, par exemple l'aluminium, le Silicium, le fer, le cuivre et leurs quantités respectives. On peut donc identifier l'alliage d'aluminium analysé. Ainsi, un tri par famille d'alliage ou un tri avec un seuil à ne pas dépasser, du type pourcentage de Silicium inférieur à x%, peut être réalisé.

Dans une autre variante de mise en oeuvre, l'étape de tri comporte une spectrométrie de fluorescence X permettant de séparer les alliages ou familles d'alliage, notamment en définissant un seuil en pourcentage de la masse de présence d'un élément d'alliage. La spectrométrie de fluorescence X est une méthode d'analyse chimique utilisant une propriété physique de la matière, la fluorescence de rayons X. Lorsque l'on bombarde de la matière avec des rayons X, la matière réémet de l'énergie sous la forme, entre autres, de rayons X. Le spectre des rayons X émis par la matière est caractéristique de la composition de la partie testée. En analysant ce spectre, on peut en déduire la composition élémentaire, c'est-à-dire les concentrations massiques en éléments de la partie testée.

Une étape de tri comprenant une spectroscopie ou une spectrométrie peut permettre de limiter une part en masse d'un élément d'alliage dans la matière première préparée. Notamment, un tri par spectroscopie ou spectrométrie peut être réalisée de telle sorte que la matière première préparée comporte une part en masse de cuivre inférieure à 0,6%.

A la fin de l'étape de tri, la matière première préparée peut être complétée par des chutes industrielles d'alliage d'aluminium pour corroyage dont les compositions sont connues.

Le procédé de fabrication d'un alliage d'aluminium pour corroyage pour fabriquer des récipients de cuisson comporte une étape de fusion de la matière première préparée issue des étapes de collecte et de tri. Cette étape de fusion est réalisée dans un four permettant de réaliser une coulée d'au moins 10 tonnes, de préférence d'au moins 15 tonnes.

La mise en oeuvre d'une quantité de matière première préparée à fondre dans le four suffisamment importante permet de limiter les variations de compositions en éléments d'alliages des lots d'alliage d'aluminium produits. Des corrections des éléments d'alliages, notamment du cuivre et du magnésium peuvent être faites lors de l'étape de fusion. Les graisses et les revêtements du type polytétrafluoroéthylène présents dans la matière première préparée sont brulés lors de l'étape de fusion. Un système adéquat de traitement des fumées est alors mis en oeuvre pour éviter toute pollution lors de la combustion des revêtements et des autres pollutions. L'alliage d'aluminium issu du four est ensuite coulé en plaques de plusieurs tonnes pour être laminé, ou mis en forme par un procédé de coulée continue.

On obtient à la sortie de l'étape de fusion un alliage d'aluminium « type série 4000 » très allié comportant au maximum 2% de silicium, 0,6% de fer, 0,6% de cuivre, 1% de manganèse et 0,2% de magnésium.

L'alimentarité de l'alliage d'aluminium pour corroyage , au sens de la norme NF EN 602, doit être vérifiée en sortie de l'étape de fusion par une mesure de la composition en éléments d'alliages. La collecte de récipients de cuisson en alliage d'aluminium en grande majorité alimentaire, notamment du fait de l'alimentarité de l'alliage d'aluminium du corps qui est la partie principale du récipient de cuisson, facilite le respect des teneurs maximales en éléments d'alliages garantissant l'alimentarité au sens de la norme NF EN 602.

Une plaque d'un tel alliage d'aluminium est apte à être laminée, découpée en disques puis les disques sont aptes à être transformés notamment par frappe en récipients de cuisson sur les lignes de production.

Bien entendu, l'invention n'est nullement limitée aux modes de réalisation décrits qui n'ont été donnés qu'à titre d'exemple. Des modifications restent possibles, notamment du point de vue de la constitution des divers éléments ou par substitution d'équivalents techniques, sans sortir pour autant du domaine de protection de l'invention.

Ainsi, dans une variante de mise en oeuvre, l'étape de tri comporte un tri par XRT ou par densité avec émission de rayon X sur les parties à analyser puis on mesure la densité atomique. Cette technique de mesure par transmission X permet de séparer de manière industrielle les métaux lourds par rapport aux métaux légers. D'un côté on émet des rayons X qui créent un rayonnement à large bande et on mesure avec une caméra l'énergie qui pénètre le matériau, pour déterminer sa densité atomique. Un repérage par caméra permet d'éjecter avec des jets d'air les parties souhaitées. Le tri par XRT peut remplacer ou affiner le tri par courant de Foucault notamment pour évacuer les quelques fractions restantes dont la densité est différente de l'aluminium notamment les métaux non ferreux type cuivre, zinc, magnésium et le reste d'acier ou acier inoxydable.

## Revendications

1. Procédé de fabrication d'un alliage d'aluminium pour corroyage emboutissable et alimentaire pour fabriquer des récipients de cuisson comportant une étape de collecte de récipients de cuisson usagés, formant une matière première brute, une étape de tri de la matière première brute pour former une matière première préparée ainsi qu'une étape de fusion de la matière première préparée **caractérisé en ce que** les étapes de collecte et de tri sont réalisées de telle sorte que la matière première préparée comporte une part en masse issue de récipients de cuisson usagés fabriqués en alliage d'aluminium de fonderie inférieure à 20%, la part restante étant issue majoritairement de récipients de cuisson usagés fabriqués en alliage d'aluminium pour corroyage.

2. Procédé de fabrication d'un alliage d'aluminium selon la revendication 1, **caractérisé en ce qu'**à l'étape de collecte, on collecte majoritairement des récipients de cuisson usagés métalliques.

3. Procédé de fabrication d'un alliage d'aluminium selon la revendication 1, **caractérisé en ce qu'**à l'étape de collecte, on collecte uniquement des récipients de cuisson usagés métalliques.

4. Procédé de fabrication d'un alliage d'aluminium selon l'une quelconque des revendications précédentes, **caractérisé en ce qu'**à l'étape de collecte, on collecte sur une zone géographique dont on détermine une estimation de la part en masse de récipients de cuisson en alliage d'aluminium de fonderie par rapport à la part de récipients de cuisson en alliage d'aluminium pour corroyage d'après les statistiques de vente de récipients de cuisson, ladite zone géographique de collecte étant suffisamment grande pour que les règles statistiques s'appliquent et **en ce que** ladite estimation participe à la détermination du type de tri effectué à l'étape de tri.

5. Procédé de fabrication d'un alliage d'aluminium selon l'une quelconque des revendications précédentes, **caractérisé en ce que** l'étape de tri comporte une étape de tri manuel pour exclure en tout ou partie les récipients de cuisson en alliage d'aluminium de fonderie.

6. Procédé de fabrication d'un alliage d'aluminium selon l'une quelconque des revendications précédentes, **caractérisé en ce que** l'étape de tri comporte une analyse spectroscopique, notamment une spectroscopie d'émission optique de plasma créé par laser.

7. Procédé de fabrication d'un alliage d'aluminium selon l'une quelconque des revendications précédentes, **caractérisé en ce qu'**il comporte une étape de broyage thermique ou à chaud et l'étape de tri comporte un tri par granulométrie.

8. Procédé de fabrication d'un alliage d'aluminium selon l'une quelconque des revendications précédentes, **caractérisé en ce que** l'étape de tri comporte une spectrométrie de fluorescence X.

9. Procédé de fabrication d'un alliage d'aluminium selon l'une quelconque des revendications précédentes, **caractérisé en ce qu'**à la fin de l'étape de tri, on incorpore dans la matière première préparée des chutes industrielles d'alliage d'aluminium pour corroyage dont les compositions et les origines sont connues.

10. Procédé de fabrication d'un alliage d'aluminium selon l'une quelconque des revendications précédentes, **caractérisé en ce qu'**à l'étape de fusion, on utilise uniquement de la matière première préparée.

11. Procédé de fabrication d'un alliage d'aluminium selon l'une quelconque des revendications précédentes, **caractérisé en ce que** l'étape de fusion est réalisée dans un four permettant de réaliser une coulée d'au moins 10 tonnes, de préférence d'au moins 15 tonnes.

12. Procédé de fabrication d'un alliage d'aluminium selon l'une quelconque des revendications précédentes, **caractérisé en ce qu'**à l'étape de collecte, on collecte les récipients de cuisson usagés en aluminium fabriqués à partir d'aluminium pour corroyage qui contiennent majoritairement des alliages d'aluminium appartenant aux séries 1000, 3000 et 4000.

## Patentansprüche

1. Verfahren zur Herstellung einer stanzbaren und alimentären Aluminiumlegierung zur Zurichtung, um Kochgefäße herzustellen, das einen Schritt zum Sammeln von verwendeten Kochgefäßen, die einen unverarbeiteten Rohstoff bilden, einen Schritt zum Sortieren des unverarbeiteten Rohstoffs zum Bilden eines zubereiteten Rohstoffs und einen Schritt zum Schmelzen des zubereiteten Rohstoffs aufweist, **dadurch gekennzeichnet, dass** die Schritte zum Sammeln und Sortieren so durchgeführt werden, dass der zubereitete Rohstoff einen Massenanteil umfasst, der von verwendeten Kochgefäßen stammt, die aus einer Gussaluminiumlegierung mit weniger als 20 % hergestellt sind, wobei der verbleibende Anteil hauptsächlich von verwendeten Kochgefäßen stammt, die aus einer Aluminiumlegierung zur Zurichtung hergestellt sind.

2. Verfahren zur Herstellung einer Aluminiumlegierung nach Anspruch 1, **dadurch gekennzeichnet, dass** in dem Schritt zum Sammeln überwiegend verwendete metallische Kochgefäße gesammelt werden.

3. Verfahren zur Herstellung einer Aluminiumlegierung nach Anspruch 1, **dadurch gekennzeichnet, dass** in dem Schritt zum Sammeln nur verwendete metallische Kochgefäße gesammelt werden.

4. Verfahren zur Herstellung einer Aluminiumlegierung nach einem der vorhergehenden Ansprüche, **dadurch gekennzeichnet, dass** in dem Schritt zum Sammeln auf einem geographischen Gebiet gesammelt wird, für das eine Schätzung des Massenanteils der Kochgefäße aus Gussaluminiumlegierung im Verhältnis zu dem Anteil der Kochgefäße aus Aluminiumlegierung zur Zurichtung nach den Verkaufsstatistiken von Kochgefäßen bestimmt wird, wobei das geographische Gebiet ausreichend groß ist, dass die statistischen Regeln anwendbar sind, und dass die Schätzung bei der Bestimmung der Art der durchgeführten Sortierung in dem Schritt zum Sortieren einbezogen wird.

5. Verfahren zur Herstellung eine Aluminiumlegierung nach einem der vorhergehenden Ansprüche, **dadurch gekennzeichnet, dass** der Schritt zum Sortieren einen manuellen Schritt zum Sortieren umfasst, um ganz oder teilweise die Kochgefäße aus Gussaluminiumlegierung auszuschließen.

6. Verfahren zur Herstellung einer Aluminiumlegierung nach einem der vorhergehenden Ansprüche, **dadurch gekennzeichnet, dass** der Schritt zum Sortieren eine spektroskopische Analyse umfasst, insbesondere eine optische Plasmaemissionsspektroskopie, die durch einen Laser erzeugt wird.

7. Verfahren zur Herstellung einer Aluminiumlegierung nach einem der vorhergehenden Ansprüche, **dadurch gekennzeichnet, dass** es einen Schritt zum thermischen oder warmen Zerkleinern umfasst, und dass der Schritt zum Sortieren eine Sortierung durch Granulometrie umfasst.

8. Verfahren zur Herstellung einer Aluminiumlegierung nach einem der vorhergehenden Ansprüche, **dadurch gekennzeichnet, dass** der Schritt zum Sortieren eine Röntgenfluoreszenzspektrometrie umfasst.

9. Verfahren zur Herstellung einer Aluminiumlegierung nach einem der vorhergehenden Ansprüche, **dadurch gekennzeichnet, dass** an dem Ende des Schritts zum Sortieren in dem zubereiteten Rohstoff Industrieabfälle aus einer Aluminiumlegierung zur Zurichtung eingebaut werden, deren Zusammensetzungen und Herkünfte bekannt sind.

10. Verfahren zur Herstellung einer Aluminiumlegierung nach einem der vorhergehenden Ansprüche, **dadurch gekennzeichnet, dass** in dem Schritt zum Schmelzen nur der zubereiteten Rohstoff verwendet wird.

11. Verfahren zur Herstellung einer Aluminiumlegierung nach einem der vorhergehenden Ansprüche, **dadurch gekennzeichnet, dass** der Schritt zum Schmelzen in einem Ofen durchgeführt wird, der es ermöglicht, ein Gussstück mit mindestens 10 Tonnen, vorzugsweise mit mindestens 15 Tonnen, herzustellen.

12. Verfahren zur Herstellung einer Aluminiumlegierung nach einem der vorhergehenden Ansprüche, **dadurch gekennzeichnet, dass** in dem Schritt zum Sammeln die gebrauchten Kochgefäße gesammelt werden, die ausgehend von Aluminium zur Zurichtung hergestellt sind und vorwiegend Aluminiumlegierungen enthalten, die den Serien 1000, 3000 und 4000 angehören.

## Claims

1. Method for manufacturing a wrought aluminium alloy, able to be pressed and of food quality, for manufacturing cooking receptacles, comprising a step of collecting used cooking receptacles, forming an untreated raw material, a step of sorting the untreated raw material in order to form a prepared raw material and a step of melting the prepared raw material, **characterised in that** the collection and sorting steps are performed so that the prepared raw material comprises a proportion by weight issuing from used cooking receptacles manufactured from cast aluminium alloy of less than 20%, the remaining proportion coming mainly from used cooking receptacles manufactured from wrought aluminium alloy.

2. Method for manufacturing an aluminium alloy according to claim 1, **characterised in that**, at the collection step, mainly used metal cooking receptacles are collected.

3. Method for manufacturing an aluminium alloy according to claim 1, **characterised in that**, at the collection step, only used metal cooking receptacles are collected.

4. Method for manufacturing an aluminium alloy according to any of the preceding claims, **characterised in that**, at the collection step, the collection is made over a geographical area where an estimation is made of the proportion by weight of cooking receptacles made from cast aluminium alloy compared with a proportion of cooking receptacles made from wrought aluminium alloy according to the sales statistics of cooking receptacles, said geographical collection area being sufficiently large for statistical rules to apply, and **in that** said estimation participates in the determination of the type of sorting carried out at the sorting step.

5. Method for manufacturing an aluminium alloy according to any of the preceding claims, **characterised in that** the sorting step comprises a manual sorting step for excluding, in whole or in part, cooking receptacles made from cast aluminium alloy.

6. Method for manufacturing an aluminium alloy according to any of the preceding claims, **characterised in that** the sorting step comprises a spectroscopic analysis, in particular laser-created plasma optical emission spectroscopy.

7. Method for manufacturing an aluminium alloy according to any of the preceding claims, **characterised in that** it comprises a thermal or hot grinding step and the sorting step comprises sorting by granulometry.

8. Method for manufacturing an aluminium alloy according to any of the preceding claims, **characterised in that** the sorting step comprises X-ray fluorescence spectrometry.

9. Method for manufacturing an aluminium alloy according to any of the preceding claims, **characterised in that**, at the end of the sorting step, industrial wrought aluminium alloy scrap, the compositions and origins of which are known, is incorporated in the prepared raw material.

10. Method for manufacturing an aluminium alloy according to any of the preceding claims, **characterised in that**, at the melting step, only prepared raw material is used.

11. Method for manufacturing an aluminium alloy according to any of the preceding claims, **characterised in that** the melting step is carried out in a furnace making it possible to carry out a casting of at least 10 tonnes, preferably at least 15 tonnes.

12. Method for manufacturing an aluminium alloy according to any of the preceding claims, **characterised in that**, at the collection step, used aluminium cooking receptacles manufactured from wrought aluminium that contain mainly aluminium alloys belonging to the 1000, 3000 and 4000 series are collected.
